# EUROPEAN PATENT APPLICATION

(11) **EP 1 681 621 A1**
(43) Date of publication of application: **19.07.2006**
(21) Application number: 06000516.2
(22) Date of filing: 11.01.2006
(51) Int. Cl.: G06F 3/033

(54) **Device with user interface having interactive elements on a writable surface**

(30) Priority: 12.01.2005 US 34489; 18.11.2005 WO PCT/US20/05041873
(71) Applicant: Leapfrog Enterprises, Inc., Emeryville, CA 94608-1070 (US)
(72) Inventor: Marggraf, James, Lafayette, CA 94549 (US); Chisholm, Alexander, San Francisco, CA 94110 (US); Edgecomb, Tracy L., Berkeley, CA 94703 (US)
(74) Representative: Ebner von Eschenbach, Jennifer

(57) **Abstract**

An interactive device that allows a user to create and interact with selectable items written on a surface. The present invention provides a user with an interface that replaces an electronic display with any surface, such as a piece of paper. The user may create user-written selectable items on the surface that execute associated functions. The user-written selectable items are persistent on the surface, allowing a user to execute functions associated with different selectable items throughout operation of the interactive device. By allowing a user to interact directly with a piece of paper, the present invention provides a unique user interface with an interactive device that provides the user with increased flexibility with regard to creation of user-written selectable items and execution of functions associated with these items.

## Description

### CROSS-REFERENCE TO RELATED APPLICATION

This Application is a Continuation-in-Part of the co-pending, commonly-owned U.S. Patent Application, Attorney Docket No. 020824-004610US, Application No. 10/803,806, filed March 17, 2004, by James Marggraff et al., entitled "SCANNING APPARATUS," and hereby incorporated by reference herein in its entirety.

This Application is a Continuation-in-Part of the co-pending, commonly-owned U.S. Patent Application, Attorney Docket No. 020824-009500US, Application No. 10/861,243, filed June 3, 2004, by James Marggraff et al., entitled "USER CREATED INTERACTIVE INTERFACE," and hereby incorporated by reference herein in its entirety.

This application is related to co-pending, commonly-owned U.S. Patent Application, Attorney Docket No. LEAP-P0313, Application No. filed ,2005, by James Marggraff et al., entitled "A METHOD AND SYSTEM FOR IMPLEMENTING A USER INTERFACE FOR A DEVICE EMPLOYING WRITTEN GRAPHICAL ELEMENTS," and hereby incorporated by reference herein in its entirety.

This application is related to co-pending, commonly-owned U.S. Patent Application, Attorney Docket No. LEAP-P0316, Application No. , filed , 2005, by James Marggraff et al., entitled "A METHOD AND SYSTEM FOR IMPLEMENTING A USER INTERFACE FOR A DEVICE THROUGH RECOGNIZED TEXT AND BOUNDED AREAS," and hereby incorporated by reference herein in its entirety.

This application is related to co-pending, commonly-owned U.S. Patent Application, Attorney Docket No. LEAP-P0320, Application No., filed , 2005, by James Marggraff et al., entitled "TERMINATION EVENTS," and hereby incorporated herein in its entirety.

### FIELD

Embodiments of the present writing relate to the field of interactive devices. More specifically, embodiments of the presentwriting relate to a pen-based interactive device.

### BACKGROUND

In the last twenty years, the use of personal computing devices, such as desktop computer systems, laptop computer systems, handheld computers systems, and tablet computer systems, has grown such that these devices are omnipresent in our society. These personal computing devices provide users with an incredible range of interactive applications, providing vastly improved business functionality, communication abilities, and entertainment possibilities.

Current personal computing devices provide access to these interactive applications by using a user interface. Typical computing devices have graphical interfaces that present information to a user using a display device, such as a monitor or display screen, and receive information from a user using an input device, such as a mouse, a keyboard, a joystick, or a stylus.

Even more so than computing systems, the use of pen and paper is ubiquitous among literate societies. While graphical user interfaces of current computing devices provide for effective interaction with many computing applications, typical graphical user interfaces have difficulty mimicking the common use of a pen or pencil and paper. For example, desktop and laptop computer systems typically do not have a pen-like interface. Moreover, input into a computer is shown on an electronic display, and is not persistent and accessible like information written on paper. Also, while a stylus used on the screen of a palmtop computer system or a tablet computer system may mimic the use of a writing element, the input is stored electronically and is also not persistent or accessible.

### SUMMARY

Accordingly, a need exists for an interactive device that interfaces with printed items on a surface to initiate functions associated with the printed items. A need also exists for an interactive device that satisfies the above need and allows for a user to create user-written selectable items on a surface that are associated with functions. A need also exists for an interactive device that satisfies the above needs and is responsive to a user selection of a user-written selectable item to execute the associated function.

Various embodiments of the present invention, an interactive device that allows a user to create and interact with selectable items written on a surface, are described herein. The present invention provides a user with an interface that replaces an electronic display with any surface, such as a piece of paper. The user may create user-written selectable items on the surface that execute associated functions. The surface may also include pre-printed selectable items that execute associated functions. The user-written and pre-printed selectable items are persistent on the surface, allowing a user to execute functions associated with different selectable items throughout operation of the interactive device. By allowing a user to interact directly with a piece of paper, the present invention provides a unique, user interface with an interactive device that provides the user with increased flexibility with regard to creation of user-written selectable items and execution of functions associated with these items.

In one embodiment, the present invention provides an interactive device including a bus, a processor, a memory unit, an audio output device, a writing element, and an optical detector. In one embodiment, the audio output device is operable to audibly render a list of potential user-written selectable items. The writing element allows a user to create a user-written selectable item on a surface. The optical detector is for detecting information on the surface. Software implemented on the processor is responsive to a user selection of the user-written selectable item and operable to execute a function associated with the user-written selectable item in response to the selection.

In one embodiment, the processor is operable to automatically identify the user-written selectable item in response to the selection using symbol recognition. In one embodiment, the processor is operable to automatically record a surface location of the user-written selectable item on the surface. In one embodiment, the processor is operable to automatically identify the user-written selectable item in response to the selection based on a detected surface location of the user-written selectable item. In one embodiment, the software is also responsive to a user selection of a pre-printed selectable item on the surface and operable to execute a function associated with the pre-printed selectable item in response to a user selecting the pre-printed selectable item.

In another embodiment, the present invention provides an operating system of a computer system, wherein the operating system is operable to detect a user-written selectable item on a surface, associate the user-written selectable item with a function, and, responsive to a user interaction with the user-written selectable item, executing the function. In one embodiment, the operating system is operable to automatically identify the user-written selectable using symbol recognition. In one embodiment, the operating system is operable to automatically record a surface location of the user-written selectable item on the surface. In one embodiment, the operating system is operable to automatically identify the user-written selectable item in response to the user interaction based on a surface location of the user-written selectable item.

In another embodiment, the present invention provides a method for facilitating interaction with user-written selectable items on a surface. At least one user-written selectable item associated with a function is detected. Interaction with the user-written selectable item is detected. In response to the interaction, the function is executed.

In the various embodiments, the user-written selectable item includes one of: a symbol representation of an application program executable by the processor, a menu item of an application program executable by the processor, a navigation item, a data, an application option selector, or another selectable item.

Broadly, this writing discloses an interactive device that allows a user to create and interact with selectable items written on a surface. The present invention provides a user with an interface that replaces an electronic display with any surface, such as a piece of paper. The user may create user-written selectable items on the surface that execute associated functions. The user-written selectable items are persistent on the surface, allowing a user to execute functions associated with different selectable items throughout operation of the interactive device. By allowing a user to interact directly with a piece of paper, the present invention provides a unique user interface with an interactive device that provides the user with increased flexibility with regard to creation of user-written selectable items and execution of functions associated with these items.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 illustrates an interactive device in accordance with an embodiment of the present invention.
Figures 2Aand 2B illustrate exemplary user-written selectable items on a sheet of paper, in accordance with embodiments of the present invention.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 shows a flowchart of the steps of a process for facilitating interaction with user-drawn selectable items on a surface in accordance with one embodiment of the present invention.
Figure 6 is a block diagram of another device upon which embodiments of the present invention can be implemented.
Figure 7 is a block diagram of another device upon which embodiments of the present invention can be implemented.
Figure 8 shows a flowchart of the steps of a device user interface process in accordance with one embodiment of the present invention.
Figure 9 shows a flowchart of the steps of a hierarchical device user interface process in accordance with one embodiment of the present invention.
Figure 10 shows a menu item tree directory according to an embodiment of the invention.
Figure 11A shows a menu item audible prompting process in accordance with one embodiment of the present invention.
Figure 11B shows a menu item selection process in accordance with one embodiment of the present invention.
Figure 11C shows a sub-menu items selection process in accordance with one embodiment of the present invention.
Figure 12 shows a plurality of different types of graphical item icons on a surface in accordance with one embodiment of the present invention.

### DETAILED DESCRIPTION

Reference will now be made in detail to various embodiments of the invention, an interactive device that allows a user to create and interact with selectable items written on a surface, examples of which are illustrated in the accompanying drawings. While the invention will be described in conjunction with these embodiments, it is understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the invention, numerous specific details are set forth in order to provide a thorough understanding of the invention. However, it will be recognized by one of ordinary skill in the art that the invention may be practiced without these specific details. In other instances, well known methods, procedures, components, and circuits have not been described in detail as not to unnecessarily obscure aspects of the invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

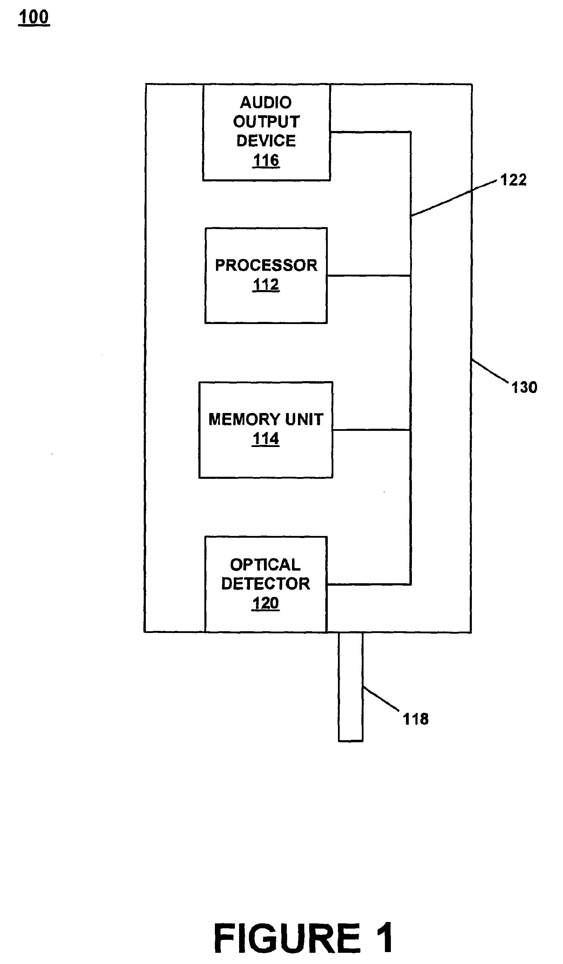

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "detecting" or "executing" or "identifying" or "rendering" or "selecting" or "recognizing" or "associating" or "recording" or "directing" or the like, refer to the action and processes of an electronic system (e.g., interactive device 100 of Figure 1), or similar electronic computing device, that manipulates and transforms data represented as physical (electronic) quantities within the electronic device's registers and memories into other data similarly represented as physical quantities within the electronic device memories or registers or other such information storage, transmission or display devices.

### EMBODIMENTS OF THE INVENTION

Various embodiments of the present invention, an interactive device that allows a user to create and interact with selectable items written on a surface, are described herein. The present invention provides a user with an interface that replaces an electronic display with any writable surface, such as a piece of paper. The user may create user-written selectable items on the surface that execute associated functions and/or represent user-written data, e.g., words, characters, numbers, symbols, etc. The surface may also include pre-printed selectable items that execute associated functions. The user-written and pre-printed selectable items are persistent on the surface, allowing a user to execute functions associated with different selectable items throughout operation of the interactive device. By allowing a user to interact directly with a piece of paper, the present invention provides a unique user interface with an interactive device that provides the user with increased flexibility with regard to creation of user-written selectable items and execution of functions associated with these items.

Figure 1 illustrates an interactive device 100 in accordance with an embodiment of the present invention. Interactive device 100 includes processor 112, memory unit 114, audio output device 116, writing element 118 and optical detector 120 within housing 130. In one embodiment, processor 112, memory unit 114, audio output device 116 and optical detector 120 are communicatively coupled over bus 122.

In one embodiment, housing 130 is shaped in the form of a stylus or a writing instrument (e.g., pen-like). A user may hold interactive device 100 in a similar manner as a stylus is held. Writing element 118 is located at one end of housing 130 such that a user can place writing element 118 in contact with a writable surface (not shown). Writing element 118 may include a pen, a pencil, a marker, a crayon, or any other marking material. It should be appreciated that writing element 118 may also include a non-marking tip. During use, a user can hold interactive device 100 and use it in a similar manner as a writing instrument to write on a surface, such as paper.

Writing element 118 may be used to create user-written selectable items on the surface. A "user-written selectable item" may include any marking created by the user. If a marking is made on a surface (e.g., a sheet of paper), the user-written selectable item may be a print element. User-written selectable item include, but are not limited to symbols, indicia such as letters and/or numbers, characters, words, shapes, lines, etc. They can be regular or irregular in shape, and they are typically created using the styfus.

Interactive device 100 allows users to create user-written selectable items that represent different functions provided by interactive device 100. In one embodiment, the user-written selectable item includes a symbol representation of an application program executable by processor 112 (e.g., a calculator application or a dictionary application). In another embodiment, the user-written selectable item may include a navigation item (e.g., a menu), a menu item of an application program executable by said processor, an application option selector, or an instance of data (e.g., a word).

In some embodiments, the user-written selectable item can include a letter or number with a line circumscribing the letter or number. The line circumscribing the letter or number maybe a circle, oval, square, polygon, etc. Such user-written selectable items appear to be like "buttons" that can be selected by the user, instead of ordinaryletters and numbers. By creating a user-written selectable item of this kind, the user can visually distinguish user-written selectable items such as functional icons from ordinary letters and numbers. Also, by creating user-written selectable items of this kind, interactive device 100 mayalso be able to better distinguish functional or menu item type user-written selectable items from non-functional or non-menu item type user-written items. For instance, a user may create a user-written selectable item that is the letter "M" which has a circle around it to create an interactive "menu" icon. The interactive device 100 maybe programmed to recognize an overlapping circle or square with the letter "M" in it as a functional user-written selectable item as distinguished from the letter "M" in a word. Computer code for recognizing such functional user-written selectable items and distinguishing them from other non-functional user-written items can reside in memory unit 114 in interactive device 100.

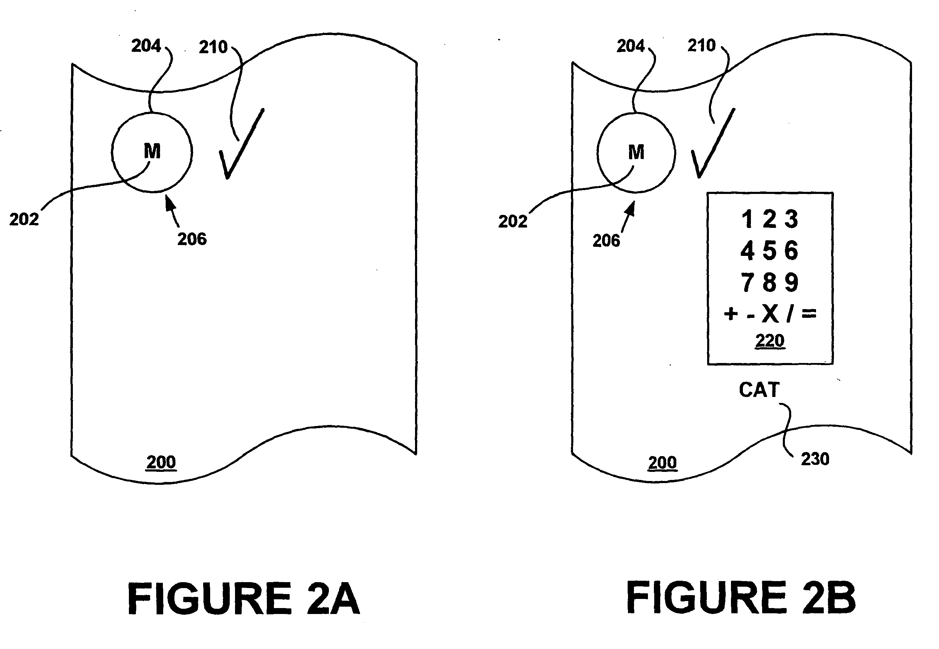

Figures 2Aand 2B illustrate exemplary user-written selectable items on a sheet of paper, in accordance with embodiments of the present invention. With reference to Figure 2A, user-written selectable element 206 is the letter "M" 202 with the circle 204 around the letter "M" 202. User-written selectable item 206 is drawn on sheet 200 with a writing element of an interactive device (e.g., writing element 118 of Figure 1).

In one embodiment, user-written selectable item 206 represents a menu function of the interactive device. To indicate a selection of a particular menu item, directory, or subdirectory, a user may create another user-written selectable item or make a gesture with the interactive device 100. For example, if the user wants to proceed down a subdirectoryof the menu, the user may then draw a checkmark 210 on sheet 200 to indicate that a selection has been made. After drawing the checkmark, the menu items associated with user-written selectable item 206 maybe audibly rendered by audio output device 116, after each subsequent selection or "down-touch" of the interactive device 100 onto the sheet 200 near user-written selectable item 206. Interaction with the checkmark 210 then selects the last option that was audibly rendered. For example, a "calculator" function could then be selected after the user hears the word "calculator" recited to change the mode of operation of the interactive device 100 to the calculator function

Figure 2B shows how a user can create a paper calculator on a blank portion of sheet 200. In this example, after the user has selected the "calculator" function as described above, interactive device 100 audibly prompts the user to write down the numbers 0-9 and the operators +, -, x, /, and =. For example, a user maybe prompted to create the user-written selectable items 220 including numbers and mathematical operators for operations such as addition, subtraction, multiplication, division, and equals. These are hard drawn on the surface. Interactive device 100 recognizes the positions of the created graphic elements and recognizes the actual user-written selectable items created. A user can then select at least two user-written selectable items to receive an audio output related to the selection of those at least two graphic elements. For example, the user may select sequence of graphic elements "4" "+" "7" "=" to hear the interactive apparatus 100 recite the result "eleven."

The menu represented by user-written selectable item 206 and the paper calculator represented by user-written selectable item 220 can be reused at a later time, since interactive device 100 has stored the locations of the user-written selectable items in memory unit 114. Also, an interaction of the pen with user-written selectable item 220 will automatically invoke the calculator function.

Figure 2B also includes data 230. In the example shown in Figure 2B, data 230 is the word "CAT". It should be appreciated that data 230 can be any information (e.g., alphanumeric symbol, image, drawing, marking, etc.) that maybe used by an application operating on interactive device 100. When written, the text string, CAT, is automatically recognized as the word cat. Its location on the surface is also recorded. Interaction of interactive device 100 with this text string automatically recalls the identified word CAT.

Optical detector 120 is atone end of the stylus-shaped interactive device 100. Optical detector 120 is operable to detect information on the surface. For example, optical detector 120 may comprise a charge coupled device. In one embodiment, interactive device also comprises an optical emitter for illuminating a portion of the surface that is detected by optical detector 120. The information detected by optical detector 120 is transmitted to processor 112.

Processor 112 mayinclude anysuitable electronics to implement the functions of the interactive device 100. Processor 112 can recognize the user-written selectable items and can identify the locations of those user-written selectable items so that interactive device 100 can perform various operations. In these embodiments, memory unit 114 maycomprise computer code for correlating any user-written selectable items produced by the user with their locations on the surface.

Memory unit 114 comprises computer code for performing any of the functions of the interactive device 100. In one embodiment, wherein computer code stored in memory unit 114 and implemented on processor 112 is responsive to a user selection of a user-written selectable item and operable to execute a function associated with the user-written selectable item in response to the selection. In another embodiment, computer code stored in memory unit 114 and implemented on processor 112 is operable to direct audio output device 116 to audibly render a listing of potential user-written selectable items, wherein processor 112 is operable to detect that a user has written a plurality of user-written selectable items, and wherein processor 112 responsive to a user selection of one or more user-written selectable items of the plurality of user-written selectable items is operable to execute a different function associated with each of the selected user-written selectable items.

In one embodiment, processor 112 is operable to automatically identify a user-written selectable item in response to a selection using symbol recognition or character recognition. In another embodiment, processor 112 is operable to automatically record a surface location of a user-written selectable item on the surface when it is written. Processor 112 is operable to automatically identify the user-written selectable item in response to a user selection based on a detected surface location of the user-written selectable item.

In one embodiment, the present invention provides an operating system of interactive device 100. The operating system is operable to detect a user-written selectable item on a surface, associate the user-written selectable item with a function, and, responsive to a user interaction with the user-written selectable item, executing the associated function.

In other embodiments, memoryunit 114 maycomprise computer code for recognizing printed characters, computer code for recognizing a user's handwriting and interpreting the user's handwriting (e.g., handwriting character recognition software), computer code for correlating positions on an article with respective print elements, code for converting text to speech *(e.g.,* a text to speech engine), computer code for reciting menu items, computer code for performing translations of language (English-to-foreign language dictionaries), etc. Software for converting text to speech is commercially available from a number of different vendors.

Memoryunit 114 mayalso comprise code for audio and visual outputs. For example, code for sound effects, code for saying words, code for lesson plans and instruction, code for questions, etc. mayall be stored in memoryunit 114. Code for audio outputs such as these maybe stored in a non-volatile memory (in a permanent or semi-permanent manner so that the data is retained even if the interactive apparatus is turned off), rather than on the article itself. Computer code for these and other functions described in the application can be included in memory unit 114, and can be created using anysuitable programming language including C, C++, etc.

Memory unit 114 maybe a removable memoryunitsuch as a ROM or flash memory cartridge. In other embodiments, memory unit 114 may comprise one or more memory units (e.g., RAM, ROM, EEPROM, etc.). Memory unit 114 may comprise any suitable magnetic, electronic, electromagnetic, optical or electro-optical data storage device. For example, one or more semiconductor-based devices can be in memoryunit 114.

Audio output device 116 may include a speaker or an audio jack (e.g., and earpiece or headphone jack) for coupling to an earpiece or a headset. In one embodiment, audio output device 116 is operable to audibly render a list of potential user-written selectable items. Audio output device 116 mayalso be operable to audibly render information in response to a user selection of a user-written selectable item.

It should be appreciated that interactive device 100 is also operable to recognize and execute functions associated with pre-printed selectable items on the surface. In one embodiment, responsive to a user selection of a pre-printed selectable item on the surface, processor 112 is operable to execute a function associated with a pre-printed selectable item in response to a user selecting the pre-printed selectable item. In one embodiment, processor 112 is operable to automatically identify a pre-printed selectable using symbol recognition. In another embodiment, processor 112 is operable to automatically identify the pre-printed selectable item based on a detected surface location of the pre-printed selectable item. Moreover, in another embodiment, processor 112 is operable identify an application program based on a particular bounded region of the surface, such that different bounded regions are associated with different application programs.

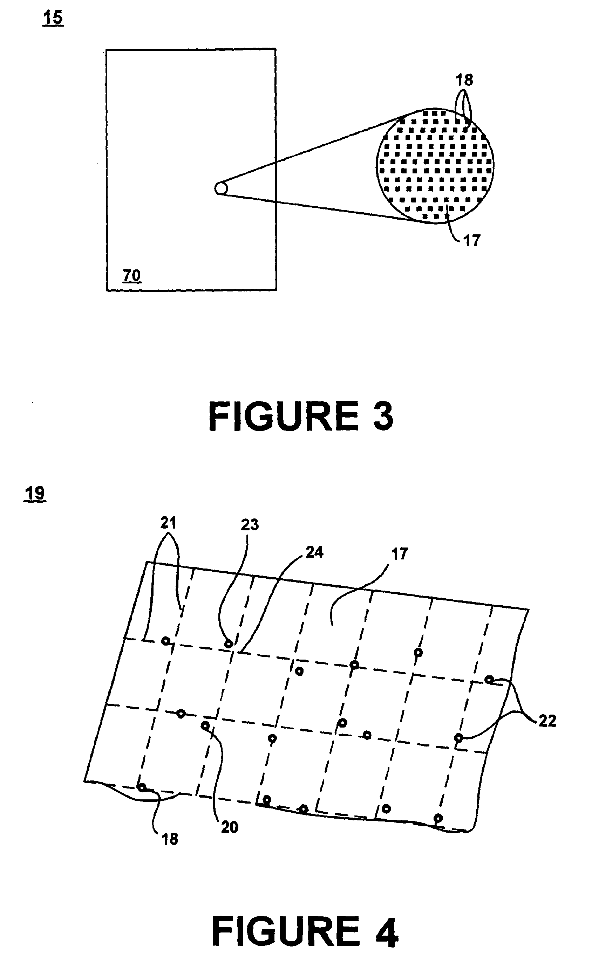

In some embodiments, the surface can be a sheet of paper with or without pre-printed selectable items. Figure 3 shows a sheet of paper 15 provided with a pattern of marks according to one embodiment of the present invention. In the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

Figure 4 shows an enlarged portion 19 of the position code 17 of Figure 3. An interactive device such as interactive device 100 (Figure 1) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined.

In one embodiment, the pattern of marks on sheet 15 are substantially invisible codes. The codes are "substantially invisible" to the eye of the user and may correspond to the absolute or relative locations of the selectable items on the page. "Substantially invisible" also includes codes that are completely or slightly invisible to the user's eye. For example, if dot codes that are slightlyinvisible to the eye of a user are printed all over a sheet of paper, the sheet mayappear to have a light grayshade when viewed at a normal viewing distance. In some cases, after the user scans the codes with interactive device 100, audio output device 116 in interactive device 100 produces unique audio outputs (as opposed to indiscriminate audio outputs like beeping sounds) corresponding to user-written selectable items that are associated with the codes.

In one embodiment, the substantially invisible codes are embodied by dot patterns. Technologies that read visible or "subliminally" printed dot patterns exist and are commercially available. These printed dot patterns are substantially invisible to the eye of the user so that the codes that are present in the dot patterns are undetectable by the user's eyes in normal use (unlike normal bar codes). The dot patterns can be embodied by, for example, specific combinations of small and large dots that can represent ones and zeros as in a binary coding. The dot patterns can be printed with ink that is different than the ink that is used to print the print elements, so that interactive device 100 can specifically read the dot patterns.

Anoto, a Swedish company, employs a technology that uses an algorithm to generate a pattern the enables a very large unique data space for non-conflicting use across a large set of documents. Their pattern, if fully printed, would cover 70 trillion 8.5" x 11" pages with unique recognition of any 2 cm square on anypage. Paper containing the specific dot patterns is commercially available from Anoto. The following patents and patent applications are assigned to Anoto and describe this basic technology and are all herein incorporated by reference in their entirety for all purposes: U.S. Patent No. 6,502,756, U.S. Application No. 10/179,966, filed on June 26, 2002, WO 01/95559, WO 01/71473, WO 01/75723, WO 01/26032, WO 01/75780, WO 01/01670, WO 01/75773, WO 01/71475, WO 00/73983, and WO 01/16691.

In some embodiments, the dot patterns may be free of other types of data such as data representing markers for data blocks, audio data, and/or error detection data. As noted above, processor 112 in interactive device 100 can determine the location of the stylus using a lookup table, and audio can be retrieved and played based on the location information. This has advantages. For example, compared to paper that has data for markers, audio, and error detection printed on it, embodiments of the invention need fewer dots, since data for markers, audio, and error detection need not be printed on the paper. Byomitting, for example, audio data from a piece of paper, more space on the paper can be rendered interactive, since actual audio data need not occupy space on the paper. In addition, since computer code for audio is stored in interactive device 100 in embodiments of the invention, it is less likely that the audio that is produced will be corrupted or altered by, for example, a crinkle or tear in the sheet of paper.

It should be appreciated that although dot patterned codes are specifically described herein, other types of substantially invisible codes may be used in other embodiments of the invention. For example, infrared bar codes could be used if the bar codes are disposed in an array on an article. Illustratively, a sheet of paper may include a 100 x 100 arrayof substantially invisible bar codes, each code associated with a different x-y position on the sheet of paper. The relative or absolute locations of the bar codes in the array maybe stored in memory unit 114 in interactive device 100.

As noted, in some embodiments, the substantially invisible codes may directly or indirectly relate to the locations of the pluralityof positions and/or any selectable items on the sheet. In some embodiments, the substantially invisible codes can directly relate to the locations of the pluralityof positions on a sheet (or other surface). In these embodiments, the locations of the different positions on the sheet maybe provided by the codes themselves. For example, a first code at a first position may include code for the spatial coordinates (e.g., a particular x-y position) for the first position on the sheet, while a second code at a second position may code for the spatial coordinates of the second position on the sheet.

Different user-written selectable items can be at the different positions on the sheet. These user-written selectable items maybe formed over the codes. For example, a first user-written selectable item can be formed at the first position overlapping the first code. A second user-written selectable item can be formed at the second position overlapping the second code. When a user forms the first user-written selectable item, the scanning apparatus recognizes the formed first print element and substantially simultaneously scans the first code that is associated with the formed first user-written selectable item. Processor 112 in interactive device 100 can determine the particular spatial coordinates of the first position and can correlate the first user-written selectable item with the spatial coordinates.

When the user forms the second user-written selectable item, the scanning apparatus recognizes the formed second user-written selectable item and substantially simultaneously scans the second code. Processor 112 can then determine the spailal coordinates of the second position and can correlate the second user-written selectable item with the spatial coordinates. A user can then subsequentlyselect the first and second user-written selectable items using interactive device 100, and interactive device 100 can perform additional operations. For example, using this methodology, a user can create a user-defined interface or a functional device on a blank sheet of paper.

Interactive device 100 mayalso include a mechanism that maps or correlates relative or absolute locations with the formed user-written selectable items in memory unit 114. The mechanism can be a lookup table that correlates data related to specific user-written selectable items on the article to particular locations on an article. This lookup table can be stored in memory unit 114. Processor 112 can use the lookup table to identify user-written selectable items at specific locations so that processor 112 can perform subsequent operations.

The surface with the substantially invisible codes can be in any suitable form. For example, the surface maybe a single sheet of paper, a note pad, filler paper, a poster, a placard, a menu, a sticker, a tab, product packaging, a box, a trading card, a magnet (e.g., refrigerator magnets), a white board, a table top, etc. Moreover, surface maybe comprised of any material, including but not limited to paper, wood, metal, plastic, etc. Any of these or other types of surfaces can be used with or without pre-printed selectable items. If the surface is a sheet, the sheet can be of any suitable size and can be made of anysuitable material. For example, the sheet may be paper based, or may be a plastic film. In some embodiments, the surface maybe a three-dimensional article with a three-dimensional surface. The three-dimensional surface may include a molded figure of a human body, animals (e.g., dinosaurs), vehicles, characters, or other figures.

In some embodiments, the surface is a sheet and the sheet maybe free of pre-printed selectable elements such as printed letters or numbers (e.g., markings made before the user creates user-written selectable items on the sheet). In other embodiments, pre-printed selectable items can be on the sheet (e.g., before the user creates user-written selectable items on the sheet). Pre-printed print elements can include numbers, icons, letters, circles, words, symbols, lines, etc. For example, embodiments of the invention can utilize pre-printed forms such as pre-printed order forms or voting ballots.

Interactive device 100 can be in any suitable form, in one embodiment, interactive device 100 is a scanning apparatus that is shaped as a stylus. In one embodiment, interactive device 100 is pocket-sized. The stylus includes a stylus housing that can be made from plastic or metal. Agripping region may be present on the stylus housing.

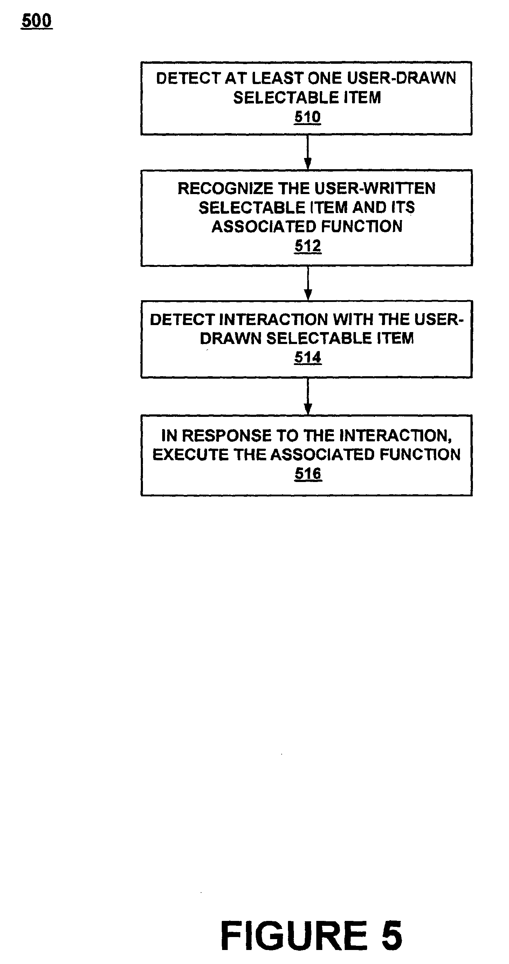

Figure 5 shows a flowchart of the steps of a process 500 for facilitating interaction with user-drawn selectable items on a surface in accordance with one embodiment of the present invention. Process 500 depicts the basic operating steps of a user interface process as implemented by an interactive device (e.g., interactive device 100) in accordance with one embodiment of the present invention as it interprets user input in the form of user-written selectable items, graphic elements, writing, marks, etc. and provides the requested functionality to the user.

At step 510, where the computer implemented functionality of the device 100 detects a user-written selectable item on a writable surface. At step 512, the user-written selectable item is recognized along with the function of the user-written selectable item. This function can be, for example, a menu function that can enunciate a predetermined list of functions (e.g., menu choices) for subsequent activation by the user. At step 514, interaction with the user-drawn selectable item is detected. The interaction may include writing the user-written selectable item, interacting with the user-written selectable item with the interactive device (e.g., tapping the user-written selectable item), or interacting with a related user-written selectable item (e.g., checkmark 210 of Figure 2B). The function is persistently associated with the user-written selectable item, enabling a subsequent access of the function (e.g., at some later time) by a subsequent interaction (e.g., tapping) of the graphical element icon. For example, in the case of a menu function, the listed menu choices can be subsequently accessed by the user at some later time by simply actuating the menu graphic element icon (e.g., tapping it).

In this manner, embodiments of the present invention implement a user interface means for navigating the functionality of an interactive device (e.g., interactive device 100 of Figure 1) using a pen and paper type interface. The user interface as implemented by the user-written selectable items provides the method of interacting with a number of software applications that execute within interactive device 100. As described above, the input to interactive device 100 includes user actions, such as a user creating a user-written selectable item or a user interacting with a user-written or pre-printed selectable item. The output from the pen is audio output, and thus, the user interface means enables the user to carry on a "dialog" with the applications and functionality of the pen. In other words, the user interface enables the user to create mutually recognized items such as user-written selectable items on a surface that allow the user and the pen to interact with one another. As described above, the mutually recognized items are typically symbols or marks or icons that the user draws on a surface, such as a sheet of paper.

### ADDITIONAL EMBODIMENTS OF THE INVENTION

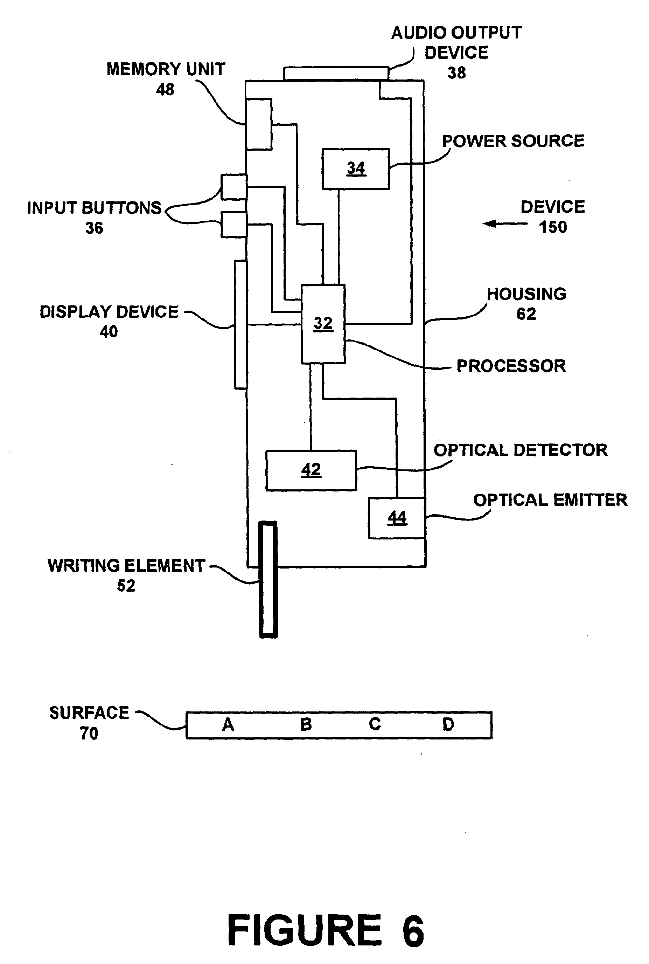

Figure 6 is a block diagram of a pen device 150 upon which other embodiments of the present invention can be implemented. In general; pen device 150 may be referred to as an optical device, more specifically as an optical reader, optical pen or digital pen. The device may contain a computer system and an operating system resident thereon. Application programs may also reside thereon.

In the embodiment of Figure 6, pen device 150 includes a processor 32 inside a housing 62. In one embodiment, housing 62 has the form of a pen or other writing or marking utensil or instrument. Processor 32 is operable for processing information and instructions used to implement the functions of pen device 150, which are described below.

In the present embodiment, the pen device 150 may include an audio output device 36 and a display device 40 coupled to the processor 32. In other embodiments, the audio output device and/or the display device are physically separated from pen device 150, but in communication with pen device 150 through either a wired or wireless connection. For wireless communication, pen device 150 can include a transceiver or transmitter (not shown in Figure 6). The audio output device 36 may include a speaker or an audio jack (e.g., for an earphone or headphone). The display device 40 may be a liquid crystal display (LCD) or some other suitable type of display.

In the embodiment of Figure 6, pen device 150 may include input buttons 38 coupled to the processor 32 for activating and controlling the pen device 150. For example, the input buttons 38 allow a user to input information and commands to pen device 150 or to turn pen device 150 on or off. Pen device 150 also includes a power source 34 such as a battery.

Pen device 150 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

The surface 70 may be a sheet a paper, although the present invention is not so limited. For example, the surface 70 may be an LCD (liquid crystal display, CRT (cathode ray tube), touchscreen, or other similar type of active electronic surface (e.g., the display of a laptop or tablet PC). Similarly, the surface 70 can be a surface comprising electronic ink, or a surface comprising reconfigurable paper.

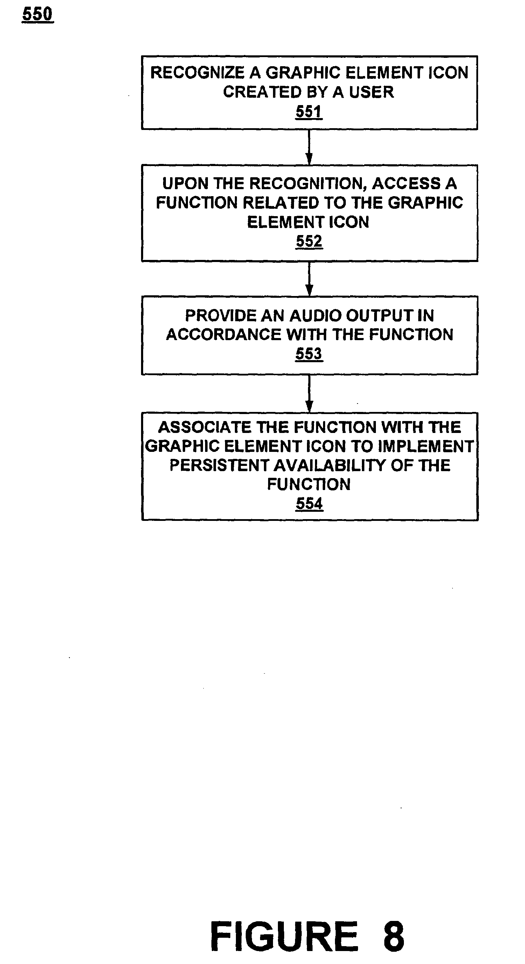

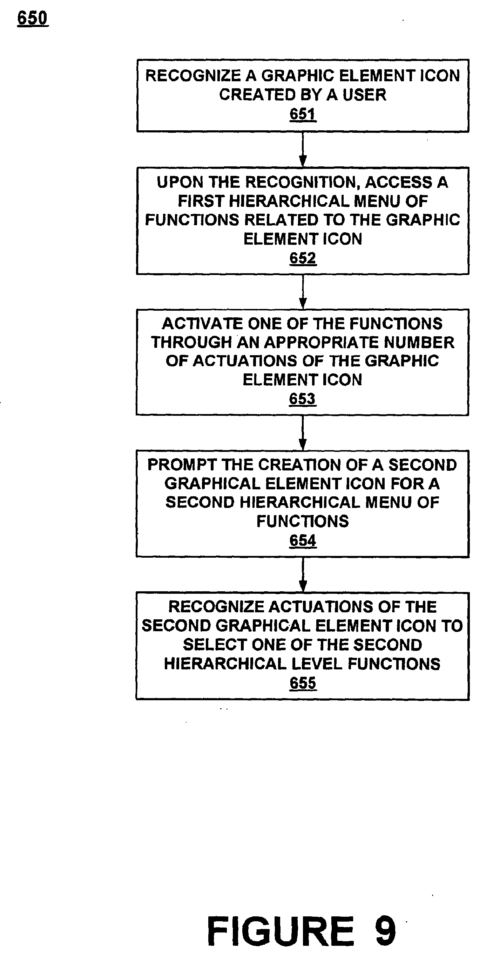

In one embodiment, a pattern of markings is printed on surface 70. The end of pen device 150 that holds optical emitter 44 and optical detector 42 is placed against or near surface 70. As pen device 150 is moved relative to the surface 70, the pattern of markings are read and recorded by optical emitter 44 and optical detector 42. As discussed in more detail above, in one embodiment, the markings on surface 70 are used to determine the position of pen device 150 relative to surface (see Figures 3 and 4). In another embodiment, the markings on surface 70 are used to encode information (see Figures 8 and 9). The captured images of surface 70 can be analyzed (processed) by pen device 150 to decode the markings and recover the encoded information.

Additional descriptions regarding surface markings for encoding information and the reading/recording of such markings by electronic devices can be found in the following patents and patent applications that are assigned to Anoto and that are all herein incorporated by reference in their entirety: U.S. Patent No. 6,502,756, U.S. Application No. 101179,966, filed on June 26, 2002, WO 01/95559, WO 01/71473, WO 01/75723, WO 01/26032, WO 01/75780, WO 01/01670, WO 01/75773, WO 01/71475, WO 10 00/73983, and WO 01116691.

Pen device 150 of Figure 6 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and instructions for processor 32.

In the embodiment of Figure 6, pen device 150 includes a writing element 52 situated at the same end of pen device 150 as the optical detector 42 and the optical emitter 44. Writing element 52 can be, for example, a pen, pencil, marker or the like, and may or may not be retractable. In certain applications, writing element 52 is not needed. In other applications, a user can use writing element 52 to make marks (e.g., graphical elements or user-written selectable items) on surface 70, including characters such as letters, words, numbers, mathematical symbols and the like. These marks can be scanned (imaged) and interpreted by pen device 150 according to their position on the surface 70. The position of the user-produced marks can be determined using a pattern of marks that are printed on surface 70; refer to the discussion of Figures 3 and 4, above. In one embodiment, the user-produced markings can be interpreted by pen device 150 using optical character recognition (OCR) techniques that recognize handwritten characters.

As mentioned above, surface 70 may be any surface suitable on which to write, such as, for example, a sheet of paper, although surfaces consisting of materials other than paper may be used. Also, surface 70 may or may not be flat. For example, surface 70 may be embodied as the surface of a globe. Furthermore, surface 70 may be smaller or larger than a conventional (e.g., 8.5x11 inch) page of paper.

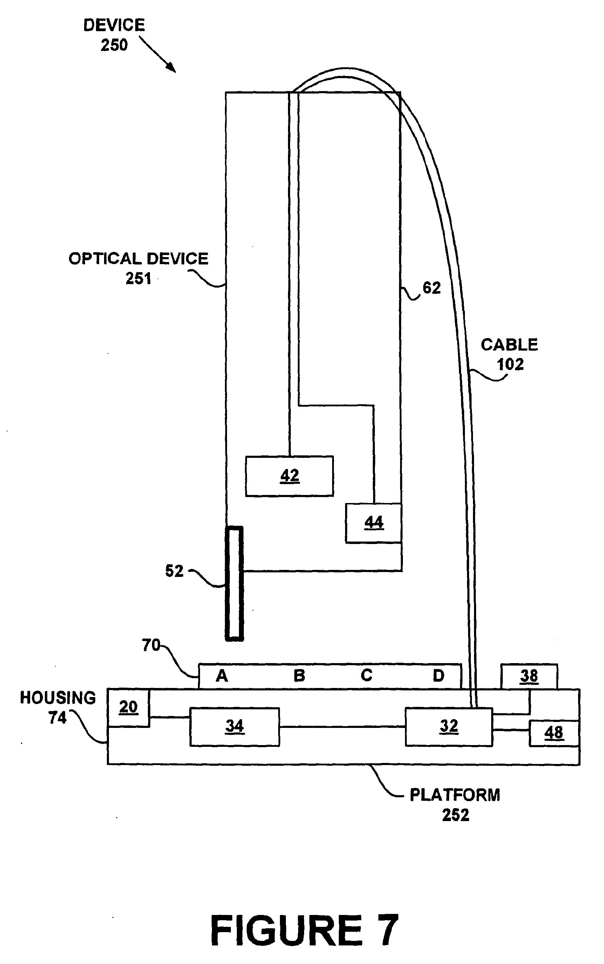

Figure 7 is a block diagram of another device 250 upon which embodiments of the present, invention can be implemented. Device 250 includes processor 32, power source 34, audio output device 36, input buttons 38, memory unit 48, optical detector 42, optical emitter 44 and writing element 52, previously described herein. However, in the embodiment of Figure 7, optical detector 42, optical emitter 44 and writing element 52 are embodied as optical device 251 in housing 62, and processor 32, power source 34, audio output device 36, input buttons 38 and memory unit 48 are embodied as platform 202 in housing 74. In the present embodiment, optical device 251 is coupled to platform 252 by a cable 102; however, a wireless connection can be used instead. The elements illustrated by Figure 7 can be distributed between optical device 251 and platform 252 in combinations other than those described above.

With reference back to Figure 6, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 6, using pen device 150 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from pen device 150. When the user creates the character, pen device 150 records the pattern of markings that are uniquely present at the position where the character is created. The pen device 150 associates that pattern of markings with the character just created. When pen device 150 is subsequently positioned over the circled "M," pen device 150 recognizes the pattern of marks associated therewith and recognizes the position as being associated with a circled "M." In effect, pen device 150 recognizes the character using the pattern of markings at the position where the character is located, rather than by recognizing the character itself.

In one embodiment, the characters described above comprise "graphic elements" that are associated with one or more commands of the pen device 150. It should be noted that such graphic elements that are associated with, and are used to access the pen device 150 implemented functions comprising commands, are referred to as "graphic element icons" hereafter in order to distinguish from other written characters, marks, etc. that are not associated with accessing functions or applications of the pen device 150. In the example just described, a user can create (write) a graphic element icon that identifies a particular command, and can invoke that command repeatedly by simply positioning pen device 150 over the graphic element icon (e.g., the written character). In one embodiment, the writing instrument is positioned over the graphical character. In other words, the user does not have to write the character for a command each time the command is to be invoked by the pen device 150; instead, the user can write the graphic element icon for a command one time and invoke the command repeatedly using the same written graphic element icon. This attribute is referred to as "persistence" and is described in greater detail below. This is also true regarding graphical element icons that are not user written but pre-printed on the surface and are nevertheless selectable by the pen device 150.

In one embodiment, the graphic element icons can include a letter or number with a line circumscribing the letter or number. The line circumscribing the letter or number may be a circle, oval, square, polygon, etc. Such graphic elements appear to be like "buttons" that can be selected by the user, instead of ordinary letters and numbers. By creating a graphic element icon of this kind, the user can visually distinguish graphic element icons such as functional icons from ordinary letters and numbers, which may be treated as data by the pen device 150. Also, by creating graphic element icons of this kind, the pen device may also be able to better distinguish functional or menu item type graphic elements from non-functional or non-menu item type graphic elements. For instance, a user may create a graphic element icon that is the letter "M" which is enclosed by a circle to create an interactive "menu" graphic element icon.

The pen device 150 may be programmed to recognize an overlapping circle or square with the letter "M" in it as a functional graphic element as distinguished from the letter "M" in a word. The graphic element icon may also include a small "check mark" symbol adjacent thereto, within a certain distance (e.g., 1 inch, 1.5 inches, etc.). The checkmark will be associated with the graphic element icon. Computer code for recognizing such functional graphic elements and distinguishing them from other non-functional graphic elements can reside in the memory unit in the pen device. The processor can recognize the graphic element icons and can identify the locations of those graphic element icons so that the pen device 150 can perform various functions, operations, and the like associated therewith. In these embodiments, the memory unit may comprise computer code for correlating any graphic elements produced by the user with their locations on the surface. The pen device 150 recognizes a "down-touch" or "down-stroke" or being placed down upon the surface (e.g., when the user begins writing) and recognizes an "up-stroke" or being picked up from the surface (e.g., when the user finishes writing). Such down-strokes and up-strokes can be interpreted by the pen device 150 as, for example, indicators as to when certain functionality is invoked and what particular function/application is invoked (e.g., triggering OCR processing). Particularly, a down-stroke quickly followed by an up-stroke (e.g., a tap of the pen device on the surface) can be associated with a special action depending upon the application (e.g., selecting a graphic element icon, text string, etc.).

It should be noted that the generic term "graphic element" may include any suitable marking created by the user (e.g., a user-written selectable item), and is distinguishable from a graphic element icon which refers to a functional graphic element that is used to access one or more functions of the device.

As mentioned above, it should be noted that graphic element icons can be created by the pen device 150 (e.g., drawn by the user) or can be pre-existing (e.g., a printed element on a sheet of paper). Example graphic elements include, but are not limited to symbols, indicia such as letters and/or numbers, characters, words, shapes, lines, etc. They can be regular or irregular in shape. User written/created graphic elements are typically created using the pen device 150. Additionally, graphic element icons usually, but not always, incorporate a circumscribing line (e.g., circle) around a character (e.g., the letter "M") to give them an added degree of distinctiveness to both the user and the pen device 150. For example, in one embodiment, an up-stroke after finishing a circle around the character can specifically indicate to the pen device 150 that the user has just created a graphic element icon.

Figure 8 shows a flowchart of the steps of a computer-implemented process 550 in accordance with one embodiment of the present invention. Process 550 depicts the basic operating steps of a user interface process as implemented by a device (e.g., pen device 150) in accordance with one embodiment of the present invention as it interprets user input in the form of graphic elements, writing, marks, etc. and provides the requested functionality to the user.

Process 550 begins in step 551, where the computer-implemented functionality of the pen device 150 recognizes a created graphical element icon (e.g., created by a user). Alternatively, the graphic element may be preprinted on the surface and its location known to the pen device 150. At step 551, if the user is writing the graphic element for the first time, the pen device 150 is using the optical sensor and the processor to perform OCR (optical character recognition) on the writing to identify the user written graphical element. Its unique location on the surface is then also recorded, in one embodiment. In step 552, once recognized, a function related to the graphical element icon is accessed. This function can be, for example, a menu function that can enunciate (e.g., audibly render) a predetermined list of functions (e.g., menu choices or sub-menu options) for subsequent activation by the user. In step 553, an audio output in accordance with the function is provided. This audio output can be, for example, the enunciation of what particular choice the user is at within the list of choices. In step 554, the function is persistently associated with the graphical element icon, enabling a subsequent access of the function (e.g., at some later time) by a subsequent actuation (e.g., tapping with the pen device 150) of the graphical element icon. For example, in the case of a menu function, the listed menu choices can be subsequently accessed by the user at some later time by simply actuating the menu graphic element icon (e.g., tapping it).

It is appreciated that a plurality of different graphic elements may exist on the surface and anytime, and the selection thereof may provide various functions to be executed by the pen device 150, for example, to invoked applications, invoke sub-menu options, etc.

It should be noted that the output of the pen device 150 can be visual output (e.g., via a display, indicator lights, etc.) in addition to, or instead of, audio output. The visual output and/or audio output can come directly from the pen device 150, or can be from another device (e.g., personal computer, speaker, LCD display, etc.) communicatively coupled to the pen device 150.

In this manner, embodiments of the present invention implement a user interface means for navigating the functionality of a computer system, particularly the pen based computer system comprising, for example, the pen device 150. The user interface as implemented by the graphical element icons provides the method of interacting with a number of software applications that execute within the pen device 150. As described above, output from the pen device 150 may include audio output, and thus, the user interface means enables the user to carry on a "dialog" with the applications and functionality of the pen device 150. In other words, the user interface enables the user to create mutually recognized items such as graphic element icons that allow the user and the pen device 150 to interact with one another. As described above, the mutually recognized items are typically symbols or marks or icons that the user draws on a surface, typically a sheet of paper.

Different graphic element icons have different meaning and different manners of interaction with the user. Generally, for a given graphic element icon, the manner of interaction will call up different computer implemented functionality of the pen device. For illustration purposes, in the case of the menu example above, the menu functionality allows the user to iterate through a list of functions that are related to the graphic element (e.g., the number of taps on the menu graphic element icon iterates through a list of functions). Audio from the pen device can enunciate the function or mode as the taps are done. One of the enunciated functions/modes can then be selected by the user through some further interaction (e.g., drawing or selecting a previously drawn checkmark graphic element associated with the graphic element icon). Once selected, the functionality and options and further sub-menus of the particular selected function can then be accessed by the user. Alternatively, if one of the audibly rendered sub-options is itself a menu graphical icon, it can be selected by the user drawing its representation on the surface and selecting it.

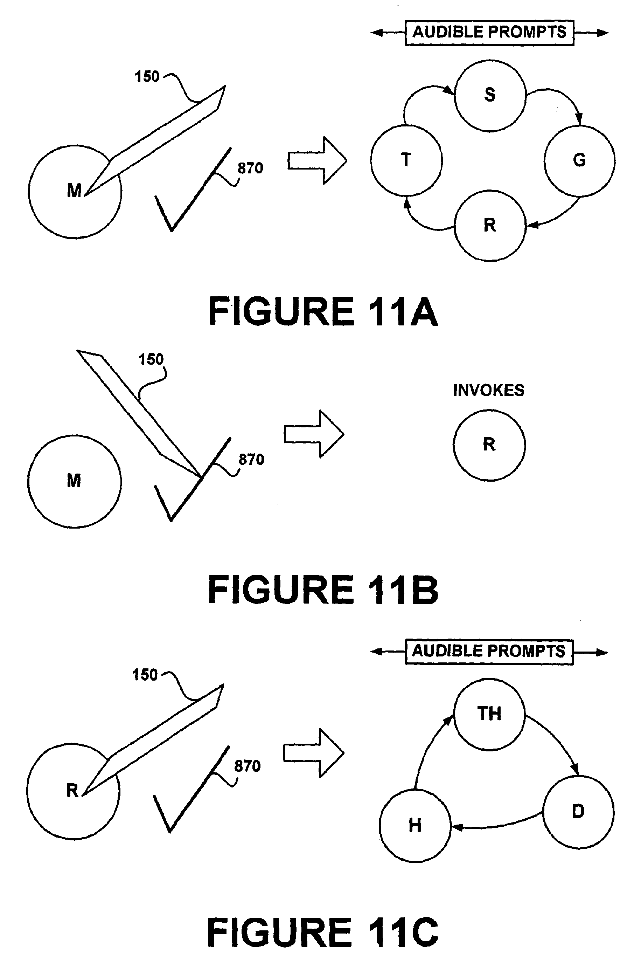

Figure 9 shows a flowchart of the computer implemented steps of a process 650 in accordance with one embodiment of the present invention. Process 650 depicts the basic operating steps of a user interface process for accessing (e.g., navigating through) a number of nested, hierarchical functions of an interactive device (e.g., pen device 150) in accordance with one embodiment of the present invention. Process 650 is described with reference to Figures 11A, 11 B, and 11C.

Process 650 begins in step 651, where the computer implemented functionality of the pen device 150 recognizes a created graphic element icon, shown in figure 11A as a menu icon "M". Like step 551, the graphic element icon may be written by the user or preprinted on the surface, In one case, the graphic element icon can provide a list of choices of further graphic element icons (e.g., hierarchical arrangement) that are associated therewith and which themselves may provide further choices. In step 652, and as shown in Figure 11 A, once recognized, a first hierarchical menu of functions related to the graphic element icon is accessed. In this example, once recognized, the menu icon "M" of step 651 causes a list of sub-options (e.g., system "S", games "G", reference "R", and tools "T") to be audibly rendered (e.g., via audible prompts), one option at a time, as shown in Figure 11A. The options are rendered in response to successive selections of the menu icon of step 651 by the pen device (e.g., pen device 150).

In step 653, and as illustrated in Figure 11B, one of the enunciated functions, in this example, the reference graphic element icon "R", is selected through an appropriate number of actuations of the menu graphic element icon (e.g., taps) and an actuation the associated checkmark icon 870. In step 654, the activated function may prompt the creation of a second graphic element icon for a second hierarchical menu of functions. The second graphic element icon, the reference icon "R" in this example, may then be drawn on the surface by the user. The selection thereof, as shown in Figure 11C, will cause a second listing of submenu items to be audibly rendered (e.g., via audible prompts) in the manner described above (e.g., Thesaurus "TH", dictionary "D", and help "H"). Subsequently in step 655, one of the enunciated functions of the second graphic element icon is activated through an appropriate number of actuations to select one of the second hierarchical level functions.

In this manner, one menu can invoke a number of sub-menus which themselves have even further sub-menus. Thus, different levels of graphic element icons can be hierarchically arranged. Generally, top-level graphic element icons which present menus of functions are referred to as group graphic element icons. Application graphic element icons are second-level graphic element icons that generally present menus of configuration options or application settings for a given application. For example, application graphic element icons can be considered as a special case of a group graphic element icon. Generally, an application graphic element icon has a specialized application related default behavior associated with it.

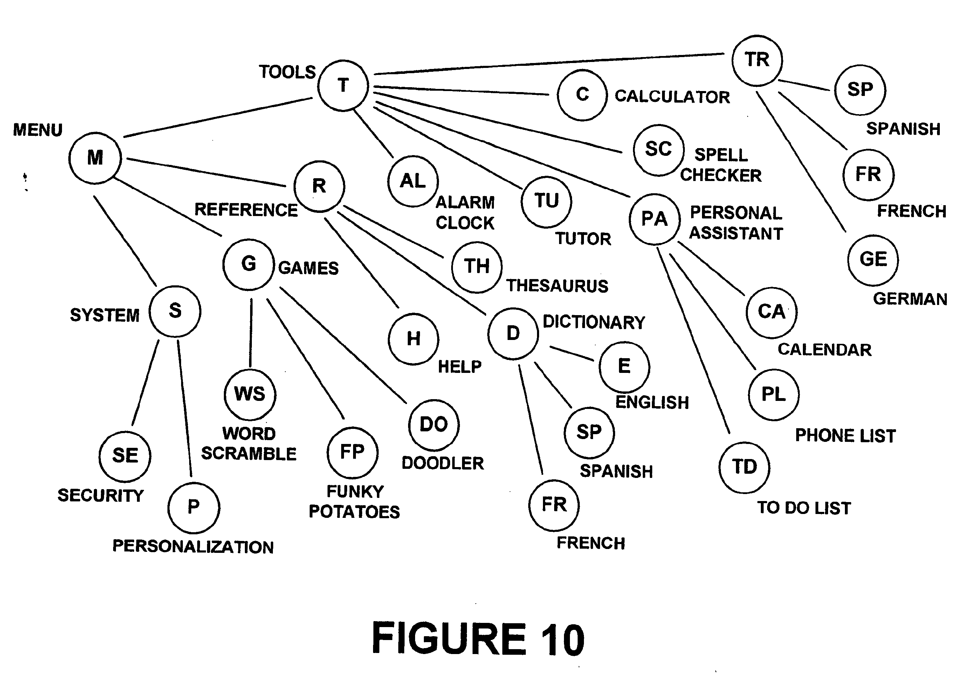

In this manner, the user may then select a menu item from the list of menu items. The menu items may include directory names, subdirectory names, application names, or names of specific data sets. Examples of directory or subdirectory names include, but are not limited to, "tools" (e.g., for interactive useful functions applicable under many different circumstances), "reference" (e.g., for reference materials such as dictionaries), "games" (e.g., for different games), etc. Examples of specific application (or subdirectory) names include "calculator", "spell checker", and "translator". Specific examples of data sets may include a set of foreign words and their definitions, a phone list, a calendar, a to-do list, etc. Additional examples of menu items are shown in Figure 10 below.

Specific audio instructions can be provided for the various menu items. For instance, after the user selects the "calculator" menu item, the pen device may instruct the user to draw the numbers 0-9, and the operators ±. -' x, /, and = on the sheet of paper and then select the numbers to perform a math catenation, In another example, after the user selects the "translator" menu item, the pen device can instruct the user to write the name of a second language and circle it. After the user does this, the pen device can further instruct the user to write down a word in English and then select the circled second language to hear the written word translated into the second language. After doing so, the audio output device in the pen device may recite the word in the second language.

Figure 10 shows a menu item tree directory according to an embodiment of the present invention including the graphical element icon representation of each option. The menu item tree directory can embody an audio menu starting from the menu graphic element icon. Starting from the top of Figure 10, a first audio subdirectory would be a tools T subdirectory. Under the tools T subdirectory, there could be a translator TR subdirectory, a calculator C subdirectory, a spell checker SC subdirectory, a personal assistant PA subdirectory, an alarm clock AL subdirectory, and a tutor TU function. Under the translator TR subdirectory, there would be Spanish SP, French FR, and German GE translator functions. Under the personal assistant PA subdirectory, there would be caiendar C, phone list FL, and to do list TD functions or subdirectories. Under the reference R subdirectory, there could be thesaurus TH function, a dictionary D subdirectory, and a help H function. Under the dictionary D subdirectory, there can be an English E function, a Spanish SF function, and a French FR function. Under the games G subdirectory, there can be games such as word scramble WS, funky potatoes FP, and doodler DO. Other games could also be present in other embodiments of the invention. Under the system S subdirectory, there can be a security SE function, and a personalization P function.

Details pertaining to some of the above directories, subdirectories, and functions are provided below. As illustrated by the menu item tree-directory, a user may proceed or navigate down any desired path by listening to recitations of the various menu items and then selecting the menu item desired. The subsequent selection of the desired menu item may occur in any suitable manner. For example, in some embodiments, a user can cause the pen device to scroll through the audio menu by "down touching" (e.g., down-stroke) on a created graphic element. The "down touching" may be recognized by the electronics in the pen device as an "actuation" by using any suitable mechanism. For instance, the pen device may be programmed to recognize the image change associated with the downward movement of it towards the selected graphic clement.

In another example, a pressure sensitive switch may be provided in the pen device so that when the end of the pen device applies pressure to the paper, the pressure switch activates. This informs the pen device to scroll through the audio menu. For instance, after selecting the circled letter "M" with the pen device (to thereby cause the pressure switch in the pen device to activate), the audio output device in the pen device may recite "tools" and nothing more. The user may select the circled letter "M" a second time to cause the audio output device to recite the menu item "reference". This can be repeated as often as desired to scroll through the audio menu. To select a particular menu item, the user can create a distinctive mark on the paper or provide a specific gesture with the scanning apparatus. For instance, the user may draw a "checkmark" (or other graphic element) next to the circled letter "M" after hearing the word "tools" to select the subdirectory "tools". Using a method such as this, a user may navigate towards the intended directory, subdirectory, or function in the menu item tree. The creation of a different graphic element or a different gesture may be used to cause the pen device to scroll upward. Alternatively, buttons or other actuators may be provided in the pen device to scroll through the menu. Once "tools" is selected, it will function as described above, but with respect to its subdirectory menu.

In other embodiments, after creating the menu graphic element icon (e.g., letter "M" with a circle), the user may select the menu graphic element icon. Software in the scanning apparatus recognizes the circled letter as being the menu symbol and causes the scanning apparatus to recite the menu items "tools", "reference", "games", and "system" sequentially and at spaced timing intervals, without down touching by the user. Audio instructions can be provided to the user. For example, the pen device may say "To select the 'tools' directory, write the letter 'T' and circle it." To select the menu item, the user may create the letter "T' and circle it. This indicates to the pen device that the user has selected the subdirectory "tools". Then, the pen device can recite the menu items under the "tools" directory for the user. Thus, it is possible to proceed directly to a particular directory, subdirectory, or function in the menu item tree by creating a graphic element representing that directory, subdirectory, or function on a sheet and interacting therewith. Alternatively, if the menu item already resides on the surface, the user can anytime interact with it to select its functions.

It should be noted that the order of items within the directories, subdirectories, option menus, etc. of the graphic element icons depicted in Figure 10 can be changed by the user. For example, the user can access a certain application and use that application to change the order in which the items of one or more directories, subdirectories, etc., are audibly rendered. Similarly, the user can change the specific audio output associated with one or more items within a given directory/subdirectory etc. for sample, the user can record her own voice for an item, use a prerecorded song (e.g., MP3, etc.), or the like, and user according as the item's audibly rendered output. Additionally, it should be noted that additional items for one or more directories, subdirectories, etc., can be added through, for example, software/or firmware updates provided to the pen device (e.g., uploading new software based functionality).

It should be noted that a respective state of multiple instances of a graphic element icon (e.g., multiple menu icons) can be persistently associated with each specific instance. For example, in a case where two or more graphic element icons exist on a common surface (e.g., created by the user, preprinted, or the like) their state, or their particular location within their directory of options can be remembered for each icon. For example, if a first menu icon is currently on option three (e.g., "games"), and a second menu icon is currently on option one (e.g., "tools"), the user can go off and perform other tasks using other applications (e.g., calculator, dictionary, etc.) and come back at some later time to either the first or second menu icon and they will correctly retain their last state (e.g., "games" for the first and "tools" for the second menu icon).

Similarly, it should be noted that a respective state of multiple instances of a graphic element icon (e.g., multiple menu icons) can be coordinated among the multiple instances and persistently associated with each specific instance. With coordinated state, where two or more graphic element icons exist on a common surface (e.g., created by the user, preprinted, or the like) their state can be remembered for each icon, but that state can be coordinated such that the options span across each instance. For example, if a first menu icon is currently on option two (e.g., "system"), a second menu icon will have its state coordinated such that it will be on option three (e.g., "tools"). The user can perform other intervening tasks and come back at some later time to either the first or second menu icon and they will correctly retain their coordinated state (e.g., "system" for the first and "tools" for the second).

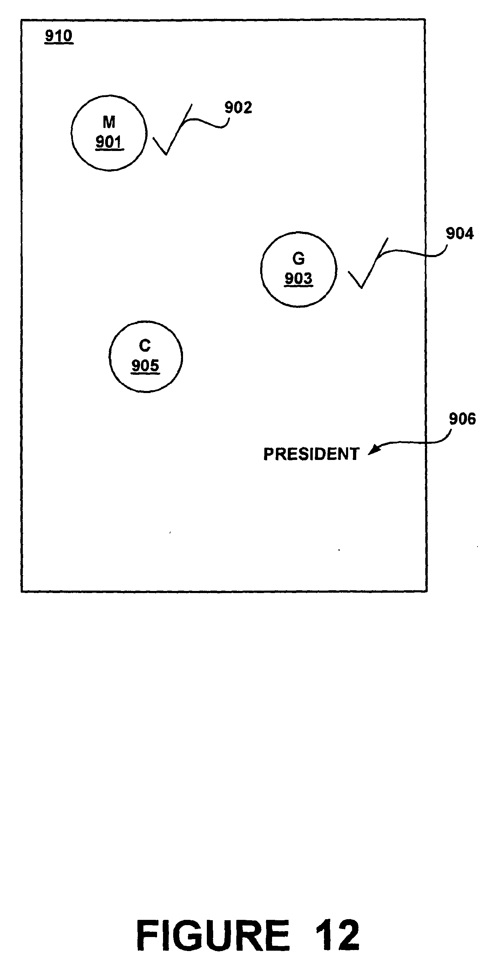

Figure 12 shows a surface 910 (e.g., a sheet of paper) having a number of graphic element icons written thereon in accordance with one embodiment of the present invention. Figure 12 shows examples of group graphic element icons (e.g., the menu icon "M" and the games icon "G") and an application icon (e.g., the calculator icon "C"). The graphic element icons can be written on the sheet paper 910 by the user or can be preprinted. As described above, group graphic element icons generally audibly render a list options. For example, repeatedly tapping at location 901 with the pen device 150 proceeds through the options of the menu directory (e.g., system, games, reference, and tools), as described in the discussion Figure 10. For example, tapping twice on the menu icon will cause the pen device 150 to audibly render "system" and then audibly render "games" indicating the selection of the games subdirectory. The game subdirectory can then be activated by touching location 902 (e.g., the checkmark) and the activation can be confirmed to the user through an audio tone.

Subsequently, the pen device 150 audibly prompts the user to create (e.g. draw) a games graphic element icon as shown in Figure 12. Repeatedly tapping the games icon at location 903 with the pen device 150 then causes the pen device 150 to proceed through the options of the games subdirectory (e.g., word scramble, funky potatoes, and doodler), as described in the discussion Figure 10. A selected one of the game subdirectory items can then be selected through a tap at location 904 (e.g., the checkmark associated with the games), or alternatively, drawing the checkmark if it is not already there.

Referring still to Figure 12, a touch at the calculator icon "C" launches the calculator application. In this manner, the calculator icon does not render a list of menu items or subdirectory options, but rather directly launches an application itself, in this case the calculator application. Once the calculator application is invoked, the pen device 150 confirms the activation (e.g., by rendering an audio tone) and audibly prompts the user through a series of actions to prepare the calculator for use (e.g., by instructing the user to draw the numbers 0-9, and the operators ±, -, x, /, and = on the surface and then select the numbers to perform a math calculation).

Importantly, in the above examples, it should be noted that an OCR (optical character recognition) process needs to be performed on a mark, single character (e.g., the letter "M"), or a text string (e.g., a word) only once, as it is first written by the user (e.g., "M" shown in Figure 12). As described above, the pen device 150 includes functionality whereby the location of the graphic elements on the surface 910 can be determined by the pen device 150 reading data encoded on the surface 910. This enables the pen device 150 to remember the location of the particular character, particular symbol, particular text string, etc. The pen device 150 can thus identify subsequent selections of a particular word by recognizing the same location of the particular word on a surface (e.g., when the user touches the pen device 150 onto the particular word at some later time). Upon subsequent selections of the word by the user, the results of the earlier performed OCR process are recalled, and these results are used by, for example, an active application (e.g., dictionary). Thus, the ability to store results of an OCR process (e.g., on words, characters, numbers, etc.), and to subsequently recall those results for use with one or more applications at a later time, greatly improves the responsiveness and the performance of the user interface implemented by embodiments of the present invention. Resource intensive OCR processing need only be performed once by the computer system resources of the pen device 150.

Figure 12 also shows a user written word 906 (e.g., text string) created using a "prompts and believe" function of the pen device 150. In accordance with embodiments of the present invention, it should be noted that some words, text strings, marks, symbols, or other graphic elements, need not be processed at all using OCR. For example, the particular word, graphic element, etc., can be created by the user in response to an audible prompt from the pen device 150, wherein the pen device prompts the user to write the particular word (e.g., "president") and subsequently stores the location of the written word with the association (e.g., from the prompt). The subsequent selection of the created word is recognized by location in the manner described above. For example, pen device 150 can instruct the user to write the word "president" 906. In response to the prompt, the user writes the word "president" and the pen device 150 will treat, or in other words believe, upon a subsequent selection of the word that what the user wrote in response to the' prompt was in fact the word "president." Depending upon the application, the user can be prompted to underline the word, put a box around the word, or otherwise and some distinguishing mark/graphic element.

When the user is done writing the prompted word, the pen device 150 recognizes the fact that the user is finished by, for example, recognizing the inactivity (e.g., the user is no longer writing) as a data entry termination event. In this manner, a "timeout" mechanism can be used to recognize the end of data entry. Another termination event could be a case where the word is underlined or boxed as described above. Additional examples of termination events are described in the commonly assigned United States Patent Application "TERMINATION EVENTS", by Marggraff et al., filed on January 12, 2005, Attorney Docket No. LEAP-P0320, and is incorporated herein in its entirety.

In this manner, the prompt-and-believe feature of embodiments of the present invention enables the creation of graphic elements having meanings that are mutually understood between the user and the pen device 150. Importantly, it should be understood that there is no OCR processing being done on the word president. Graphic elements created using the "prompt-and-believe" function can be associated with other applications, options, menus, functions etc., whereby selection of the prompt-and-believe graphic element (e.g. by tapping) can invoke any of the above. Eliminating the requirement for any OCR processing lowers the computational demands on the pen device 150 and thus improves the responsiveness of the user interface.

Although embodiments of the present invention have been described in the context of using surfaces encoded with markings in order to determine location of the pen device, it should be noted that embodiments of the present invention are suitable for use with pen devices that determine location using other means that do not require encoded surfaces. For example, in one embodiment, a pen device can incorporate one or more position location mechanisms such as, for example, motion sensors, gyroscopes, etc., and be configured to accurately store a precise location of a given surface (e.g., a sheet of paper). The precise location of the surface can be stored by, for example, sequentially touching opposite corners of the surface (e.g., a rectangular sheet of paper). The pen device would then recognize the location of graphic elements written by the user on the surface by comparing the stored precise location of the surface with the results of its location determination means.

Various embodiments of the invention, providing a user interface having interactive elements on a writable surface, are thus described. While the present invention has been described in particular embodiments, it should be appreciated that the invention should not be construed as limited by such embodiments, but rather construed according to the below claims.

## Claims

1. An interactive device comprising:
a bus;
a processor coupled to said bus;
a memory unit coupled to said bus;
an audio output device coupled to said bus;
a writing element for allowing a user to create a user-written selectable item on a surface; and
an optical detector coupled to said bus for detecting information on said surface;
wherein software implemented on said processor is responsive to a user selection of said user-written selectable item and operable to execute a function associated with said user-written selectable item in response to said selection.

2. The interactive device of Claim 1 wherein said processor is operable to automatically identify said user-written selectable item in response to said selection using symbol recognition.

3. The interactive device of Claim 1 wherein said processor is operable to automatically record a surface location of said user-written selectable item on said surface.

4. The interactive device of Claim 1 or 3 wherein said processor is operable to automatically identify said user-written selectable item in response to said selection based on said surface location of said user-written selectable item or on a detected surface location of said user-written selectable item.

5. The interactive device of Claim 1 wherein said audio output device is operable to audibly render a list of potential user-written selectable items in response to an interaction with one user-written selectable item on said surface.

6. The interactive device of Claim 5 wherein said audio output device is operable to audibly render instructions describing how to draw a said potential user-written selectable item.

7. The interactive device of Claim 1 wherein said user-written selectable item comprises at least one of: a symbol representation of an application program executable by said processor; a menu item of an application program executable by said processor; a menu item of a hierarchy of menu items in a hierarchical relationship of menu items associated with an operating system of said interactive device.

8. The interactive device of Claim 1 wherein said user-written selectable item comprises at least one of: a navigation item; a data; an application option selector.

9. The interactive device of Claim 1 wherein said surface comprises encoded paper that has surface location information encoded in a pattern on said encoded paper.

10. The interactive device of Claim 1 wherein said bus, said processor, said memory unit, said audio output device, said optical detector, and said writing element are comprised within a single pen-shaped housing.

11. The interactive device of Claim 1 wherein said software is operable to direct said audio output device to audibly render information in response to said selection of said user-written selectable item.

12. The interactive device of Claim 1 wherein said optical detector is for detecting said user-written selectable item on said surface.

13. The interactive device of Claim 1 wherein said software is responsive to a user selection of a pre-printed selectable item on said surface and operable to execute a function associated with said pre-printed selectable item in response to a user selecting said pre-printed selectable item.

14. The interactive device of Claim ¹³ wherein said pre-printed selectable item and said user-written selectable item are coordinated in state such that options of said pre-printed selectable item and said user-written selectable item span across said pre-printed selectable item and said user-written selectable item.

15. The interactive device of Claim 13 wherein said software is operable to automatically identify said pre-printed selectable item in response to a user selecting said pre-printed selectable item using symbol recognition.

16. The interactive device of Claim 13 wherein said processor is operable to automatically identify said pre-printed selectable item in response to a user selecting said pre-printed selectable item based on a surface location of said pre-printed selectable item.

17. The interactive device of Claim 1 wherein said optical detector is operable to provide said processor with information to recognize said user-written selectable item based on a location on said surface and is also operable to provide said processor with information such that said processor can recognize a selection of said user-written selectable item based on said location.

18. The interactive device of Claim 1 wherein said processor is operable to identify an application program based on selection of a particular bounded region of said surface, wherein different bounded regions are associated with different application programs.

19. An operating system of a computer system, wherein said operating system is operable to detect a user-written selectable item on a writable surface, associate said user-written selectable item with a function, and, responsive to a user interaction with said user-written selectable item, automatically executing said function.

20. The operating system of Claim 19 wherein said user interaction is a user contacting said user-written selectable item with a writing instrument.

21. The operating system of Claim 19 further operable to automatically detect said user-written selectable item using symbol recognition.

22. The operating system of Claim ¹⁹ further operable to automatically record a surface location of said user-written selectable item on said surface.

23. The operating system of Claim 19 further operable to automatically detect said user-written selectable item in response to said user interaction based on a surface location of said user-written selectable item.

24. The operating system of Claim 23 wherein said surface is a writable surface and said user interaction is a user contacting said user-written selectable item with a writing instrument.

25. The operating system of Claim 19 further operable to direct an audio output device to audibly render information associated with said user-written selectable item in response to said user interaction.

26. The operating system of Claim 19 wherein said user-written selectable item comprises at least one of a symbol representation of an application program executable by said processor; a menu item of an application program executable by said processor; a menu item of a hierarchy of menu items in a hierarchical relationship of menu items associated with said operating system.

27. The operating system of Claim 19 wherein said user-written selectable item comprises at least one of: a navigation item; a data; an application option selector.

28. The operating system of Claim 19 wherein said surface comprises encoded paper that has surface location information encoded in a pattern on said encoded paper.

29. The operating system of Claim 19 wherein said computer system is a pen-based device comprising an optical detector, an audio output device, a writing element, a processor, and a memory unit.

30. A method for facilitating interaction with user-written selectable items on a writable surface, said method comprising:
detecting at least one user-written selectable item associated with a function, wherein said user-written selectable item resides on said writable surface;
detecting interaction with said user-written selectable item, wherein said interaction comprises a writing element contacting said user-written selectable item; and
in response to said interaction, a pen device comprising a processor and said writing element executing said function.

31. The method as recited in Claim 39 wherein said user-written selectable item comprises at least one of: a symbol representation of an application program executable by said processor; a menu item of an application program executable by said processor; a menu item of a hierarchy of menu items in a hierarchical relationship of menu items associated with an operating system of said interactive device.

32. The method as recited in Claim 30 wherein said user-written selectable item comprises at least one of: a navigation item; a data; an application option selector.

33. The method as recited in Claim 30 wherein said function is at least one of: an application; an audible rendering of a menu comprising a listing of navigation items.

34. The method as recited in Claim ³⁰. further comprising audibly rendering an identification of at least one said user-written selectable item.

35. An interactive device comprising:
a bus;
a processor coupled to said bus;
a memory unit coupled to said bus;
an audio output device coupled to said bus;
a writing element for allowing a user to create a user-written selectable item on a writable surface; and
an optical detector coupled to said bus for detecting information on said writable surface;
wherein software implemented on said processor is operable to direct said audio output device to audibly render a listing identifying potential user-written selectable items, wherein said processor is operable to detect that a user has written a plurality of user-written selectable items, and wherein said processor responsive to a user selection of one or more user-written selectable items of said plurality of user-written selectable items and is operable to execute a different function associated with each of the user-written selectable items in response to selection thereof.

36. The interactive device of Claim 35 wherein said user selection comprises contact by said writing element with said user-written selectable item.

37. The interactive device of Claim 35 wherein said processor is operable to automatically identify said plurality of user-written selectable items in response to said user selection using symbol recognition.

38. The interactive device of Claim 35 wherein said processor is operable to automatically record a surface location of said plurality of user-written selectable items on said surface.

39. The interactive device of Claim 35 wherein said processor is operable to automatically identify one or more said user-written selectable items in response to said user selection based on a detected surface location of said user-written selectable items.

40. The interactive device of Claim 35 wherein said plurality of user-written selectable items comprises at least one of: a symbol representation of an application program executable by said processor; a menu item of an application program executable by said processor; a menu item of a hierarchy of menu items in a hierarchical relationship of menu items associated with an operating system of said interactive device.

41. The interactive device of Claim 35 wherein said plurality of user-written selectable items comprises at least one of a navigation item; data; an application option selector.

42. The interactive device of Claim 35 wherein said surface comprises encoded paper that has surface location information encoded in a pattern on said encoded paper.

43. The interactive device of Claim 35 wherein said software is responsive to a user selection of a pre-printed selectable item on said surface and operable to execute a function associated with said pre-printed selectable item in response to a user selecting said pre-printed selectable item.
